# EUROPEAN PATENT APPLICATION

(11) **EP 4 819 339 A1**
(43) Date of publication of application: **07.10.2026**
(21) Application number: 23960041.4
(22) Date of filing: 23.12.2023
(51) Int. Cl.: H01M 50/30, H01M 50/143

(54) **VENT VALVE AND MANUFACTURING METHOD THEREFOR, BATTERY CELL, BATTERY, AND ELECTRIC DEVICE**

(30) Priority: 30.11.2023 WO PCT/CN2023/135729
(71) Applicant: Contemporary Amperex Technology Co., Limited, Ningde, Fujian 352100 (CN)
(72) Inventor: MENG, Wanqiu, Ningde, Fujian 352100 (CN); YE, Yonghuang, Ningde, Fujian 352100 (CN); XUE, Longfei, Ningde, Fujian 352100 (CN); CHEN, Long, Ningde, Fujian 352100 (CN); ZHANG, Xiaoxi, Ningde, Fujian 352100 (CN)
(74) Representative: Gong, Jinping
(86) International application number: PCT/CN2023/141303
(87) International publication number: WO 2025/112139

(57) **Abstract**

The present application discloses a vent valve (30), a battery cell, a battery, and an electric device. The vent valve (30) includes: a metal sheet (31), the metal sheet (31) at least including a first through hole (310); a connecting member (33), the connecting member (33) including at least one second through hole (330), where the connecting member (33) is arranged on the metal sheet (31), and the first through hole (310) is communicated with the second through hole (330); and a breathable membrane (32), the breathable membrane being arranged on the connecting member (33) and covering the second through hole (330). By providing the connecting member (33), deformation of the breathable membrane during processing can be reduced, further preventing the deterioration of gas permeability caused by the deformation, thereby enhancing the structural stability of the vent valve (30), prolonging the service life of the vent valve (30), while also helping improve the sealing performance of the vent valve (30) and broadening the selection range of the breathable membrane materials.

## Description

### TECHNICAL FIELD

The present application relates to the field of new energy technology, and in particular, to a vent valve and a manufacturing method therefor, a battery cell, a battery, and an electric device.

### BACKGROUND

During use, a battery may generate gases; for example, a lead-acid battery may generate hydrogen gas. These gases increase the internal pressure of the battery, thereby affecting normal operation of the battery, and some gases may even combust or explode, posing potential safety hazards. Therefore, how to improve the reliability of batteries has become an urgent problem to be addressed.

### SUMMARY

In view of the technical problems existing in the background technology, the present application provides a vent valve and a manufacturing method therefor, a battery cell, a battery, and an electric device, aiming to improve the reliability of the battery and the electric device.

To this end, according to a first aspect, the present application provides a vent valve, including: a metal sheet, the metal sheet including at least one first through hole; a connecting member, the connecting member including at least one second through hole, where the connecting member is disposed on the metal sheet, and the first through hole is in communication with the second through hole; and a breathable membrane, the breathable membrane being disposed on the connecting member and covering the second through hole. By providing the connecting member, deformation generated during the direct compounding of the breathable membrane and the metal sheet can be reduced, including physical deformation caused by stretching and deformation caused by material denaturation due to relatively high temperatures, thereby alleviating the problem of deteriorated gas permeability due to deformation, enhancing the structural stability and service life of the vent valve and, in turn, enhancing the reliability of the battery and the electric device.

In the technical solution of the embodiments of the present application, the vent valve further includes a backing member, the backing member being made of a breathable material, the connecting member surrounds the backing member, and the backing member is at least partially located in the second through hole. The backing member is capable of supporting the breathable membrane, so that the breathable membrane is less likely to deform, which is beneficial for enhancing the structural stability and service life of the vent valve.

In some embodiments, the metal sheet includes a first recess, the first through hole is located in the first recess, and the backing member is at least partially disposed in the first recess and covers the first through hole. By providing the first recess, a height difference between surfaces of the backing member and the connecting member of different heights facing the breathable membrane is reduced, improving the adaptability to backing members and connecting members of different thicknesses during assembly. In addition, the first recess is capable of accommodating the backing member and the connecting member, thereby reducing the thickness of the vent valve and lowering the space occupancy of the vent valve in the battery.

In some embodiments, the connecting member is at least partially located in the first recess, and a surface of the backing member facing the breathable membrane is flush with a surface of the connecting member facing the breathable membrane. When the surface of the backing member facing the breathable membrane is flush with the surface of the connecting member facing the breathable membrane, during thermal compounding of the breathable membrane and the connecting member, issues caused by stretching of the breathable membrane, including local thinning due to internal stress, reduction in mechanical strength, and changes in water permeability and gas permeability, are reduced. As a result, the structural stability and service life of the vent valve are enhanced, thereby enhancing the reliability of the battery and the electric device.

In some embodiments, the connecting member protrudes from the first recess, a depth of the first recess is less than the thickness of the backing member, and the surface of the backing member facing the breathable membrane and the surface of the connecting member facing the breathable membrane are located between a surface of the metal sheet facing the breathable membrane and the breathable membrane. In this case, the first recess is capable of accommodating a part of the connecting member, thereby reducing the thickness of the vent valve and lowering the space occupancy of the vent valve in the battery.

In some embodiments, the connecting member is entirely located in the first recess, and the depth of the first recess is greater than or equal to the thickness of the backing member. In this case, the surface of the connecting member facing the breathable membrane is lower than the surface of the metal sheet facing the breathable membrane, or the surface of the connecting member facing the breathable membrane is flush with the surface of the metal sheet facing the breathable membrane. The first recess is capable of accommodating the entire connecting member, further reducing the thickness of the vent valve and lowering the space occupancy of the vent valve in the battery.

In some embodiments, the breathable membrane is entirely located in the first recess, and the depth of the first recess is greater than or equal to a sum of the thicknesses of the backing member and the breathable membrane. In this case, a surface of the breathable membrane away from the backing member is located in the space of the first recess, or is flush with a surface of the metal sheet away from the first through hole. The first recess is capable of accommodating the entire connecting member and the entire breathable membrane, further reducing the thickness of the vent valve and lowering the space occupancy of the vent valve in the battery.

In some embodiments, the metal sheet further includes a second recess, a depth of the second recess is greater than the depth of the first recess, the second recess is located on the bottom wall of the first recess, the first recess surrounds the second recess, and the backing member is at least partially disposed on the second recess and covers the first through hole. By providing the first recess and the second recess and disposing the backing member in the second recess, the thickness of the vent valve can be further reduced, and the space occupancy of the vent valve in the battery is lowered.

In some embodiments, the connecting member is at least partially located in the first recess, the backing member is located in the second through hole, and a surface of the backing member facing the breathable membrane is flush with a surface of the connecting member facing the breathable membrane. By disposing the backing member and the connecting member in the second recess and the first recess respectively, a height difference between the surfaces of the backing member and the connecting member of different heights facing the breathable membrane is reduced, improving the adaptability to backing members and connecting members of different thicknesses during assembly. When the surface of the backing member facing the breathable membrane is flush with the surface of the connecting member facing the breathable membrane, during thermal compounding of the breathable membrane and the connecting member, issues caused by stretching of the breathable membrane, including local thinning due to internal stress, reduction in mechanical strength, and changes in water permeability and gas permeability, are reduced, enhancing the structural stability and service life of the vent valve and, in turn, enhancing the reliability of the battery and the electric device.

In some embodiments, the connecting member protrudes from the first recess, the depth of the first recess is less than the thickness of the connecting member, the depth of the second recess is less than the thickness of the backing member, and the surface of the backing member facing the breathable membrane and the surface of the connecting member facing the breathable membrane are located between the surface of the metal sheet facing the breathable membrane and the breathable membrane. For backing members and connecting members with large thicknesses and relatively large thickness differences, by providing the first recess and the second recess, the height difference between their surfaces facing the breathable membrane can be reduced, enhancing the adaptability to backing members and connecting members of different thicknesses during assembly. In addition, during thermal compounding of the breathable membrane and the connecting member, issues caused by stretching of the breathable membrane, including local thinning due to internal stress, reduction in mechanical strength, and changes in water permeability and gas permeability, are reduced, thereby enhancing the structural stability and service life of the vent valve and, in turn, enhancing the reliability of the battery and the electric device. In addition, the thickness of the vent valve is reduced, and the space occupancy of the vent valve in the battery is lowered.

In some embodiments, the connecting member is entirely located in the first recess, and the depth of the first recess is greater than or equal to the thickness of the connecting member. In this case, the surface of the metal sheet facing the breathable membrane is higher than the surface of the connecting member facing the breathable membrane, or the surface of the metal sheet facing the breathable membrane is flush with the surface of the connecting member facing the breathable membrane. By disposing the connecting member entirely in the first recess, the thickness of the vent valve is reduced, and the space occupancy of the vent valve in the battery is lowered. In addition, when they are flush, issues caused by stretching of the breathable membrane, including local thinning due to internal stress, reduction in mechanical strength, and changes in water permeability and gas permeability, are reduced, thereby enhancing the structural stability and service life of the vent valve and, in turn, enhancing the reliability of the battery and the electric device.

In some embodiments, the breathable membrane is entirely located in the first recess, and the depth of the first recess is greater than or equal to a sum of the thickness of the connecting member and the thickness of the breathable membrane. By disposing the breathable membrane entirely in the first recess, the thickness of the vent valve can be further reduced, and the space occupancy of the vent valve in the battery is lowered.

In some embodiments, both the backing member and the connecting member are disposed on the surface of the metal sheet, and the backing member covers the first through hole. By directly disposing the backing member and the connecting member on the surface of the metal sheet, secondary processing of the metal sheet is reduced, thereby saving operational steps.

In some embodiments, the connecting member is located on the surface of the metal sheet, and the breathable membrane is located on a surface of the connecting member away from the metal sheet. By providing the connecting member, deformation generated during the direct compounding of the breathable membrane and the metal sheet can be reduced, thereby alleviating the problem of deteriorated gas permeability due to deformation, enhancing the structural stability and service life of the vent valve and in turn, enhancing the reliability of the battery and the electric device.

In some embodiments, the connecting member is located on the surface of the metal sheet, the connecting member has a third recess, the second through hole is located in the third recess, and the breathable membrane is disposed on the third recess and located between the connecting member and the metal sheet. By providing the connecting member, deformation generated during the direct compounding of the breathable membrane and the metal sheet can be reduced, thereby alleviating the problem of deteriorated gas permeability due to deformation, enhancing the structural stability and service life of the vent valve and in turn, enhancing the reliability of the battery and the electric device.

In some embodiments, the metal sheet includes a first recess, the first through hole is located in the first recess, the connecting member is at least partially located in the first recess, and the breathable membrane is located on the surface of the connecting member away from the first through hole. By providing the first recess, at least a part of the connecting member can be accommodated, thereby reducing the thickness of the vent valve and lowering the space occupancy of the vent valve in the battery.

In some embodiments, the connecting member protrudes from the first recess, and a depth of the first recess is less than the thickness of the connecting member. In this case, the first recess is capable of accommodating a part of the connecting member, thereby reducing the thickness of the vent valve and lowering the space occupancy of the vent valve in the battery.

In some embodiments, the connecting member is entirely located in the first recess, and the depth of the first recess is greater than or equal to the thickness of the connecting member. By disposing the connecting member entirely in the first recess, the first recess is capable of accommodating the entire connecting member, further reducing the thickness of the vent valve and lowering the space occupancy of the vent valve in the battery.

In some embodiments, the breathable membrane is entirely located in the first recess, and the depth of the first recess is greater than or equal to the sum of the thicknesses of the backing member and the breathable membrane. By disposing the breathable membrane entirely in the first recess, the first recess is capable of accommodating the entire connecting member and the entire breathable membrane, further reducing the thickness of the vent valve and lowering the space occupancy of the vent valve in the battery.

In some embodiments, the thickness of the connecting member is 50 to 1000 µm. Through the above arrangement, it is beneficial to improve the bonding strength between the connecting member and the metal sheet, and between the connecting member and the breathable membrane, while also allowing the vent valve to have a relatively small thickness, thereby lowering the space occupancy of the vent valve in the battery.

In some embodiments, the material of the connecting member includes a polypropylene-based polymer material and/or a modified polypropylene-based polymer material, where the modified polypropylene-based polymer material is a polypropylene-based polymer material with polar functional groups on a surface thereof, the polar functional groups including - OH, -COOH, and/or -NH₂; optionally, the breathable membrane and the connecting member are made of the same material or different materials. Through the above arrangement, since polypropylene-based polymer materials have low density, it is beneficial to reduce the weight of the vent valve. In addition, by providing polar functional groups, chemical bonding can be formed between the connecting member and the metal sheet, which is beneficial for improving the interfacial bonding strength between the connecting member and the metal sheet, enhancing the structural stability and service life of the vent valve and, in turn, enhancing the reliability of the battery and the electric device.

According to a second aspect, the present application provides a manufacturing method for a vent valve, including: providing a metal sheet, the metal sheet including at least one first through hole; providing a connecting member, with the connecting member disposed on the metal sheet, where the connecting member includes at least one second through hole, and the first through hole is in communication with the second through hole; and providing a breathable membrane, with the breathable membrane disposed on the connecting member and covering the second through hole, where a heat treatment temperature of the connecting member and the metal sheet is greater than or equal to a glass transition temperature of the breathable membrane, and a heat treatment temperature of the breathable membrane and the connecting member is less than the glass transition temperature of the breathable membrane. By providing the connecting member, and with the heat treatment temperature of the connecting member and the metal sheet being greater than or equal to the glass transition temperature of the breathable membrane, and the heat treatment temperature of the breathable membrane and the connecting member being less than the glass transition temperature of the breathable membrane, deformation generated during the direct compounding of the breathable membrane and the metal sheet can be reduced, further alleviating the problem of deteriorated gas permeability due to deformation, enhancing the structural stability and service life of the vent valve, and in turn, enhancing the reliability of the battery and the electric device.

According to a third aspect, the present application provides a battery cell, including: a housing assembly; and the vent valve as described in any one of the above embodiments, or a vent valve manufactured by the manufacturing method for the vent valve, disposed on the housing assembly. Through the above arrangement, the structural stability and service life of the vent valve are enhanced, thereby enhancing the reliability of the battery.

In the technical solution of the embodiments of the present application, the housing assembly includes a top cover and a housing, the top cover or the housing having a vent hole and a mounting recess being disposed around the vent hole. The mounting recess is located on a side of the top cover or the housing facing toward or away from the cell structure of the battery cell, and the vent valve is disposed in the mounting recess. By providing the vent hole and the mounting recess around the vent hole on the top cover or the housing, the vent valve may be disposed at different positions of the battery cell according to specific application scenarios, enhancing the flexibility in arrangement of the vent valve and meeting different application needs.

According to a fourth aspect, the present application provides a battery, including the vent valve as described in any one of the above embodiments, or the vent valve manufactured by the manufacturing method for the vent valve, or the aforementioned battery cell. Through the above arrangement, the structural stability and service life of the vent valve are enhanced, thereby enhancing the reliability of the battery.

According to a fifth aspect, the present application provides an electric device, including the aforementioned battery. Through the above arrangement, the structural stability and service life of the vent valve are enhanced, thereby enhancing the reliability of the battery.

The above description is only an overview of the technical solutions of the present application. In order to more clearly understand the technical means of the present application and to implement them in accordance with the content of the description, and to make the above and other objects, features, and advantages of the present application more obvious and easier to understand, the specific embodiments of the present application are specifically illustrated below.

### BRIEF DESCRIPTION OF DRAWINGS

To describe technical solutions of the present application more clearly, the following briefly describes the accompanying drawings required for describing the embodiments of the present application. Apparently, the accompanying drawings in the following description show merely some embodiments of the present application, and persons of ordinary skill in the art may still derive other drawings from the accompanying drawings without creative efforts. In the drawings:
FIG. 1 is a schematic structural diagram of a vent valve according to one or more embodiments of the present application;
FIG. 2 is a cross-sectional view of the vent valve shown in FIG. 1;
FIG. 3 is a schematic structural diagram of a metal sheet of a vent valve according to one or more embodiments of the present application;
FIG. 4 is a schematic cross-sectional structural diagram of a vent valve according to one or more embodiments of the present application;
FIG. 5 is a schematic cross-sectional structural diagram of a vent valve according to one or more embodiments of the present application;
FIG. 6 is a schematic cross-sectional structural diagram of a vent valve according to one or more embodiments of the present application;
FIG. 7 is a schematic cross-sectional structural diagram of a vent valve according to one or more embodiments of the present application;
FIG. 8 is a schematic cross-sectional structural diagram of a vent valve according to one or more embodiments of the present application;
FIG. 9 is a schematic cross-sectional structural diagram of a vent valve according to one or more embodiments of the present application;
FIG. 10 is a schematic cross-sectional structural diagram of a vent valve according to one or more embodiments of the present application;
FIG. 11 is a schematic cross-sectional structural diagram of a vent valve according to one or more embodiments of the present application;
FIG. 12 is a schematic cross-sectional structural diagram of a vent valve according to one or more embodiments of the present application;
FIG. 13 is a schematic cross-sectional structural diagram of a vent valve according to one or more embodiments of the present application;
FIG. 14 is a schematic cross-sectional structural diagram of a vent valve according to one or more embodiments of the present application;
FIG. 15 is a schematic cross-sectional structural diagram of a vent valve according to one or more embodiments of the present application;
FIG. 16 is a schematic cross-sectional structural diagram of a vent valve according to one or more embodiments of the present application;
FIG. 17 is a schematic cross-sectional structural diagram of a vent valve according to one or more embodiments of the present application;
FIG. 18 is a schematic cross-sectional structural diagram of a vent valve according to one or more embodiments of the present application;
FIG. 19 is a schematic cross-sectional structural diagram of a vent valve according to one or more embodiments of the present application;
FIG. 20 is a schematic cross-sectional structural diagram of a vent valve according to one or more embodiments of the present application;
FIG. 21 is a schematic cross-sectional structural diagram of a vent valve according to one or more embodiments of the present application;
FIG. 22 is a schematic cross-sectional structural diagram of a vent valve according to one or more embodiments of the present application;
FIG. 23 is an exploded schematic structural diagram of a battery cell according to an embodiment of the present application;
FIG. 24 is an exploded schematic structural diagram of a battery according to an embodiment of the present application; and
FIG. 25 is a schematic structural diagram of an electric device according to an embodiment of the present application.

In the drawings:
1000. vehicle; 100. battery; 200. controller; 300. motor; 10. enclosure; 20. battery cell; 30. vent valve; 11. first portion; 12. second portion; 21. top cover assembly; 22. housing; 23. cell structure; 21a. electrode terminal; 21b. explosion-proof valve; 21c. shielding member; 211. vent hole; 212. mounting recess; 31. metal sheet; 32. breathable membrane; 33. connecting member; 34. backing member; 31a. first surface; 31b. second surface; 32a. third surface; 32b. fourth surface; 33a. fifth surface; 33b. sixth surface; 34a. seventh surface; 34b. eighth surface; 310. first through hole; 311. first recess; 312. second recess; 330. second through hole; 331. third recess; 311a. first recess surface; 312a. second recess surface; 331a. third recess surface; D1. depth of the first recess; D2. depth of the second recess; D3. thickness of the third recess; H. thickness of the backing member; h. thickness of the connecting member; and A. thickness of the breathable membrane.

### DESCRIPTION OF EMBODIMENTS

In order to make the objectives, technical solutions, and effects of the present application clearer and more definite, the embodiments of the technical solutions of the present application will be described in detail below in conjunction with the accompanying drawings. The following embodiments are only used to illustrate the technical solutions of the present application more clearly, and thus serve as examples only, and cannot be used to limit the protection scope of the present application.

Unless otherwise defined, all technical and scientific terms used herein have the same meaning as commonly understood by one of ordinary skill in the technical field of the present application; the terms used herein are only for the purpose of describing specific embodiments and are not intended to limit the present application; the terms "including" and "having" and any variations thereof in the specification, claims, and above description of the accompanying drawings of the present application are intended to cover non-exclusive inclusions.

In the description of the embodiments of the present application, the technical terms "first", "second", and the like are only used to distinguish different objects, and shall not be understood as indicating or implying relative importance or implicitly indicating the number, specific order, or primary and secondary relationship of the indicated technical features. In the description of the embodiments of the present application, the term "a plurality of" refers to two or more (including two), similarly, "a plurality of groups" refers to two or more groups (including two groups), "a plurality of pieces" refers to two or more pieces (including two pieces), unless otherwise specifically limited.

As used herein, "embodiment" means that a particular feature, structure, or characteristic described in connection with the embodiment can be included in at least one embodiment of the present application. The appearance of the phrase in various places in the specification does not necessarily refer to the same embodiment, nor is it an independent or alternative embodiment that is mutually exclusive from other embodiments. Those of ordinary skill in the art will explicitly and implicitly understand that the embodiments described herein can be combined with other embodiments.

In the description of the embodiments of the present application, the term "and/or" is merely an association describing associated objects, indicating that three relationships can exist, for example, A and/or B may indicate that A exists alone, A and B exist simultaneously, or B exists alone. In addition, the character "/" herein generally indicates that the associated objects are in an "or" relationship.

Quantities, ratios, and other numerical values are presented herein in range format. It should be understood that such range format is used for convenience and brevity, and should be flexibly understood to not only include numerical values explicitly specified as range limits, but also to include all individual numerical values or sub-ranges within the stated range, as if each numerical value and sub-range were explicitly specified.

If not specifically stated, all steps of the present application can be performed sequentially, randomly, or in parallel, preferably sequentially. For example, the method includes steps (a) and (b), indicating that the method can include steps (a) and (b) performed sequentially, or steps (b) and (a) performed sequentially, or steps (a) and (b) performed in parallel simultaneously. For example, the foregoing method may further include step (c), which indicates that step (c) may be added to the method in any ordinal position, for example, the method may include steps (a), (b), and (c), steps (a), (c), and (b), steps (c), (a), and (b), or the like.

Batteries are one of the key devices in new energy technology and are widely used in fields such as power supply for electronic devices, power sources for electric vehicles, and energy storage and regulation for renewable new energy. During the use of a battery, reliability is a very important consideration factor. Batteries with high reliability can reduce losses caused by accidents. In addition, the reliability of batteries directly affects the breadth of their application fields, and batteries with good reliability can be promoted and used in more important application scenarios with higher reliability requirements. Therefore, developing batteries with high reliability is the key to the further development of the battery industry.

Gases generated during the use of a battery mainly come from the following sources. First, redox decomposition of the electrolyte solution, as voltages of the positive and negative electrode sheets change, the electrolyte solution tends to be oxidized/reduced on the surface of the positive/negative electrode, leading to gas generation. Second, residual impurities in positive electrode materials undergo decomposition reactions during battery cycling, thereby generating gases. Third, residual water due to insufficient drying and water generated by side reactions undergo electrolysis when current is present, producing hydrogen and oxygen. Fourth, during overcharge and over-discharge of the battery, decomposition of chemical materials produces gases such as acetylene and carbon monoxide. The accumulation of these gases leads to an increase in internal pressure of the battery, which may not only cause battery swelling and electrolyte solution leakage, but in severe cases, may also trigger explosion accidents.

In summary, developing a highly reliable battery exhaust device is of great significance for ensuring normal service life of batteries, improving the charge and discharge performance of the battery, reducing the occurrence of accidents, and the like. This is also a necessary condition for the battery industry to achieve large-scale application and truly enter the public life.

Therefore, it is very necessary to provide a vent valve for the battery, so as to timely discharge various gases generated inside the battery and ensure normal operation of the battery. The inventor has found that the vent valves currently used in batteries tend to deform as usage time increases, thereby affecting the exhaust function. The reason for this phenomenon is that in the vent valves currently used in batteries, the breathable membrane responsible for the exhaust function also serves to form a sealed bond with a metal sheet, and when the breathable membrane and the metal sheet are directly compounded, the temperature during the processing may reach the glass transition temperature of the breathable membrane, causing changes in the material structure of the breathable membrane, which in turn leads to deformation of the breathable membrane and deterioration of the gas permeability.

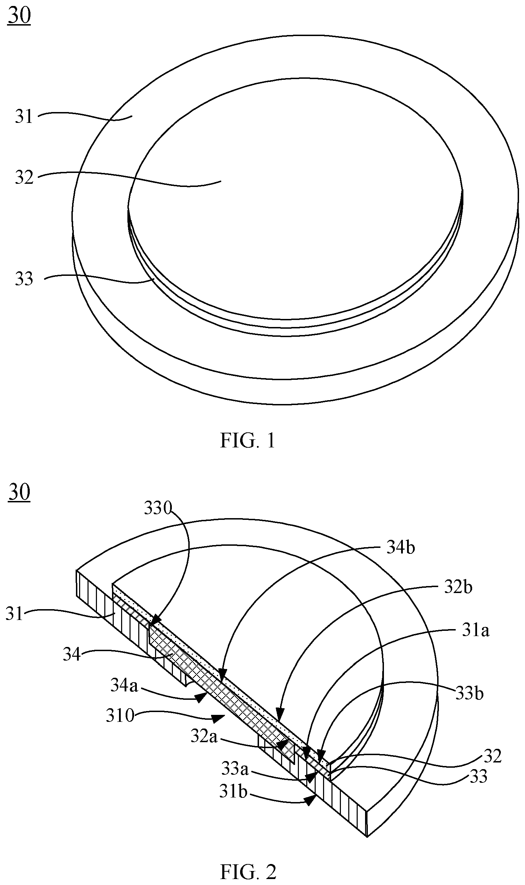

To address the above problems, the present application provides a vent valve. Referring to FIG. 1 and FIG. 2, a vent valve 30 includes a metal sheet 31, a breathable membrane 32, and a connecting member 33. The metal sheet 31 includes at least one first through hole 310. The connecting member 33 includes at least one second through hole 330. The connecting member 33 is disposed on the metal sheet 31. The first through hole 310 corresponds to the second through hole 330. The breathable membrane 32 is disposed on the connecting member 33 and covers the second through hole 330.

In some embodiments, the metal sheet 31 has a first surface 31a and a second surface 31b disposed opposite to each other. The breathable membrane 32 has a third surface 32a and a fourth surface 32b disposed opposite to each other. The connecting member 33 has a fifth surface 33a and a sixth surface 33b disposed opposite to each other. The fifth surface 33a of the connecting member 33 is fixedly connected to the first surface 31a of the metal sheet 31. The sixth surface 33b of the connecting member 33 is fixedly connected to the third surface 32a of the breathable membrane 32.

The vent valve 30 is a protective assembly, attachable and detachable, that is disposed on a battery and formed by combining a breathable membrane material with a valve body through processes such as injection molding, welding, bonding, and hot melting, and is used for controlling gases inside the battery, such as carbon dioxide, hydrogen, and methane. During its life cycle, when internal pressure of the battery increases to a certain value, the vent valve 30 allows the internal gases of the battery to be discharged from the inside, which is beneficial for reducing the internal pressure of the battery and effectively improving the long-term reliability of the battery. When the internal pressure of the battery decreases, the vent valve 30 can prevent external air, moisture, and dust from entering the battery.

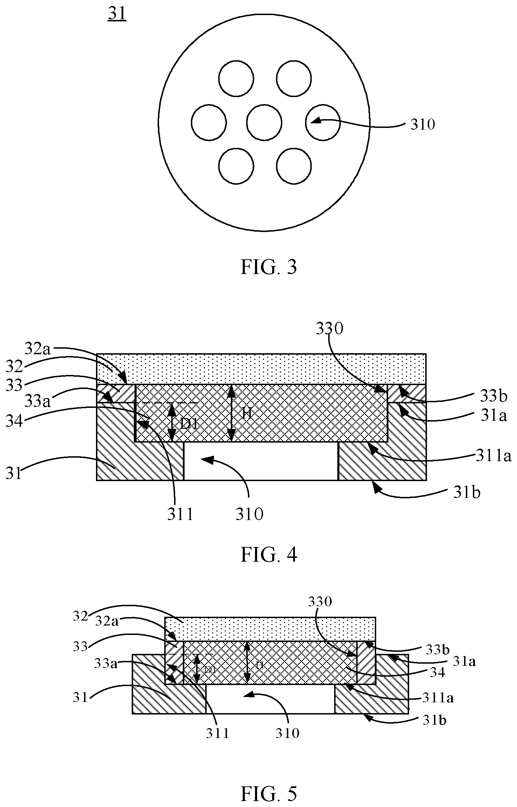

Among the various components of the vent valve 30, the metal sheet 31 serves as a medium for connecting the vent valve 30 to the top cover of the battery cell, and the connection method includes laser welding and the like. In addition, the metal sheet 31 provides support for the breathable membrane. Also referring to FIG. 3, the metal sheet 31 is provided with at least one first through hole 310 serving as a release channel for gases inside the battery. The shape of the first through hole 310 includes geometric shapes such as circular, square, or elliptical. The metal sheet 31 may also be provided with multiple through holes, and the aperture, shape, and arrangement of the through holes are not specifically limited herein.

The breathable membrane 32 is a core component of the vent valve 30. When the battery generates gas and the internal pressure of the battery increases, the breathable membrane 32 elastically expands under pressure to form a gap, creating a pressure relief channel. In consideration of the application environment of the battery, the breathable membrane 32 first needs to have good gas permeability, so the breathable membrane is made of a porous structure with pore sizes in a range of 0.1 to 10 µm, at which air molecules can pass freely while water molecules and dust impurity macromolecules cannot pass. In addition, the breathable membrane 32 needs to have good weather resistance, chemical corrosion resistance, and structural stability. If the battery is a power battery for automobiles, the breathable membrane 32 also needs to have oil repellency. Therefore, the material of the breathable membrane 32 is usually a polymer material, such as polytetrafluoroethylene or polypropylene. In addition, since gases generated inside the battery may cause a rapid increase in internal pressure, the breathable membrane 32 needs to have certain mechanical strength and elasticity.

In the present application, in addition to the metal sheet 31 and the breathable membrane 32, a connecting member 33 is added. The connecting member 33 includes at least one second through hole 330, corresponding to the first through hole 310 of the metal sheet 31. The second through hole 330 may have a circular, square, elliptical, or other geometric shape. An outer contour of the connecting member 33 may be circular, square, elliptical, or other geometric shape. The connecting member 33 connects the breathable membrane 32 and the metal sheet 31, serving both sealing and connecting functions.

In the manufacturing process of the vent valve 30, the connecting member 33 is first thermally compounded with the metal sheet 31, and then the breathable membrane 32 is thermally fused with the connecting member 33. Compared to the connection conditions between the metal sheet 31 and the connecting member 33, the connection conditions between the breathable membrane 32 and the connecting member 33 are milder. In the absence of the connecting member 33, the breathable membrane 32 and the metal sheet 31 are directly fixedly connected. In this process, stretching during the compounding process causes physical deformation of the breathable membrane; in addition, when the temperature exceeds the glass transition temperature of the breathable membrane 32, molecular chain segments within the polymer material begin to move, the degree of deformation gradually increases and cannot be recovered, so the breathable membrane 32 deforms. Taking polytetrafluoroethylene as an example, when the temperature exceeds 327°C, the stability of the structure and properties of polytetrafluoroethylene begins to decline, ultimately leading to poor sealing of the vent valve and changes in the gas permeability of the breathable membrane. Therefore, the present application can reduce the deformation of the breathable membrane under high temperature and high-pressure environments, further improving the deteriorated gas permeability due to deformation, thereby enhancing the structural stability and service life of the vent valve and in turn, enhancing the reliability of the battery and the electric device.

According to some embodiments of the present application, the vent valve 30 further includes a backing member 34. The backing member 34 is made of a breathable material, the connecting member 33 surrounds the backing member 34, and the backing member 34 is at least partially located in the second through hole 330.

The backing member refers to a component in the vent valve that provides supporting effect for the breathable membrane, making the breathable membrane less prone to deformation. The backing member has higher gas permeability than the breathable membrane and therefore does not affect the gas-permeation process of the breathable membrane. The backing member has stable chemical properties, is resistant to acid and alkali corrosion, weather-resistant, and can adapt to harsh use environments. The melting point of the backing member is greater than 140°C, so that it is not prone to deformation under conditions of relatively high battery temperature and can provide supporting and fixing effects for the breathable membrane. The thickness of the backing member ranges from 0.2 to 2 mm, balancing the supporting effect and the rationality of the thickness of the vent valve. The material of the backing member may be selected from a wide range of options, including porous polymers such as polypropylene-based materials, polyamide-based materials, polytetrafluoroethylene, and fluorinated ethylene propylene; metal-organic framework porous materials; carbon membranes; and ceramic-based porous materials.

The shape and size of the backing member correspond to the inner contour of the connecting member, and an outer edge of the backing member is in close contact with an inner edge of the connecting member without a gap. Through this arrangement, during thermal compounding of the breathable membrane and the connecting member, the problem of collapse or deformation of the breathable membrane at an edge gap between the connecting member and the backing member caused by the presence of a gap between the breathable membrane and the backing member is alleviated, thereby improving the performance stability of the breathable membrane, enhancing the structural stability and service life of the vent valve and in turn, enhancing the reliability of the battery and the electric device.

According to some embodiments of the present application, the metal sheet 31 includes a first recess 311. Continuing to refer to FIG. 4 to FIG. 9, the metal sheet 31 includes at least one first through hole 310. The first through hole 310 is located in the first recess 311, and the backing member 34 is at least partially disposed in the first recess 311 and covers the first through hole 310. The first recess 311 has a first recess surface 311a. The first recess surface 311a faces the first surface 31a. The first through hole 310 extends through the first recess surface 311a and the second surface 31b.

In one embodiment, the connecting member 33 is at least partially located in the first recess 311, and a surface of the backing member 34 facing the breathable membrane 32 is flush with a surface of the connecting member 33 facing the breathable membrane 32. In some embodiments, the backing member 34 has a seventh surface 34a and an eighth surface 34b disposed opposite to each other. The eighth surface 34b is flush with the sixth surface 33b.

The existence of the backing member provides additional support force for the breathable membrane, making the breathable membrane less prone to deformation during operation, which is beneficial for enhancing the structural stability and service life of the vent valve. In addition, the step between the backing member and the connecting member is improved or eliminated. During thermal compounding of the breathable membrane and the connecting member, issues caused by stretching of the breathable membrane, including local thinning due to internal stress, reduction in mechanical strength, and changes in water permeability and gas permeability, are reduced. As a result, the structural stability and service life of the vent valve are enhanced, thereby enhancing the reliability of the battery and the electric device.

By providing the first recess and making the surface of the backing member facing the breathable membrane flush with the surface of the connecting member facing the breathable membrane, the height difference between the surfaces of the backing member and the connecting member of different heights facing the breathable membrane is reduced, improving the adaptability to backing members and connecting members of different thicknesses during assembly. In addition, during thermal compounding of the breathable membrane and the connecting member, issues caused by stretching of the breathable membrane, including local thinning due to internal stress, reduction in mechanical strength, and changes in water permeability and gas permeability, are reduced. As a result, the structural stability and service life of the vent valve are enhanced, thereby enhancing the reliability of the battery and the electric device. In addition, the first recess provided in the metal sheet is capable of accommodating the backing member and the connecting member, thereby reducing the thickness of the vent valve and lowering the space occupancy of the vent valve in the battery.

In one embodiment, the connecting member 33 may also be directly disposed on the surface of the metal sheet 31. Referring to FIG. 4, the depth D1 of the first recess 311 is less than the thickness H of the backing member 34. The connecting member 33 is located between the surface of the metal sheet 31 facing the breathable membrane 32 and the breathable membrane 32. The backing member 34 is located in the first recess 311. In this case, the fifth surface 33a of the connecting member 33 is fixedly connected to the first surface 31a of the metal sheet 31. The backing member 34 is accommodated in the first recess 311 and the second through hole 330. The third surface 32a of the breathable membrane 32 is fixedly connected to the sixth surface 33b of the connecting member 33 and covers the backing member 34.

For backing members and connecting members with large thickness differences, by disposing the backing member in the first recess, a height difference between their surfaces facing the breathable membrane is reduced, improving the adaptability to backing members and connecting members of different thicknesses during assembly. In addition, during thermal compounding of the breathable membrane and the connecting member, issues caused by stretching of the breathable membrane, including local thinning due to internal stress, reduction in mechanical strength, and changes in water permeability and gas permeability, are reduced. As a result, the structural stability and service life of the vent valve are enhanced, thereby enhancing the reliability of the battery and the electric device. In addition, the first recess provided in the metal sheet is capable of accommodating the backing member or the backing member and the connecting member, thereby reducing the thickness of the vent valve and lowering the space occupancy of the vent valve in the battery.

In one embodiment, continuing to refer to FIG. 5, the connecting member 33 protrudes from the first recess 311, the depth D1 of the first recess 311 is less than the thickness H of the backing member 34, and the surface of the backing member 34 facing the breathable membrane 32 and the surface of the connecting member 33 facing the breathable membrane 32 are located between the surface of the metal sheet 31 facing the breathable membrane 32 and the breathable membrane 32. In this case, both the connecting member 33 and the backing member 34 are located in the first recess 311. The fifth surface 33a of the connecting member 33 is fixedly connected to the first recess surface 311a of the first recess 311. The backing member 34 is accommodated in the second through hole 330. The third surface 32a of the breathable membrane is fixedly connected to the sixth surface 33b of the connecting member 33 and covers the backing member 34.

For backing members and connecting members with large thicknesses, by disposing the connecting member and the backing member in the first recess, the first recess provided in the metal sheet is capable of accommodating the backing member and the connecting member, thereby reducing the thickness of the vent valve and lowering the space occupancy of the vent valve in the battery.

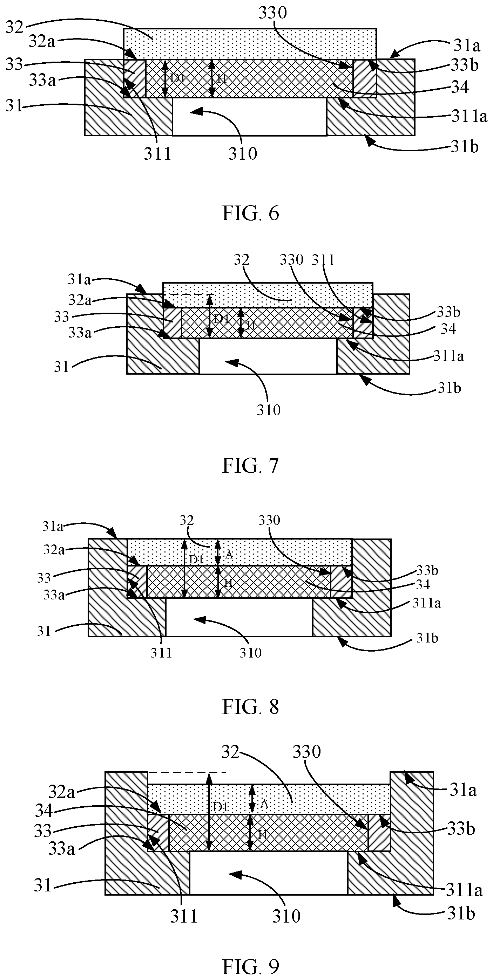

In one embodiment, continuing to refer to FIG. 6 to FIG. 9, the connecting member 33 is entirely located in the first recess 311, and the depth D1 of the first recess 311 is greater than or equal to the thickness H of the backing member 34.

The first case is that the depth D1 of the first recess 311 is equal to the thickness H of the backing member 34. Referring to FIG. 6, both the connecting member 33 and the backing member 34 are located in the first recess 311. The surface of the connecting member 33 facing the breathable membrane 32, the surface of the backing member 34 facing the breathable membrane 32, and the surface of the metal sheet 31 facing the breathable membrane 32 are flush with each other. In this case, the fifth surface 33a of the connecting member 33 is fixedly connected to the first recess surface 311a of the first recess 311. The backing member 34 is accommodated in the second through hole 330. The third surface 32a of the breathable membrane 32 is fixedly connected to the sixth surface 33b of the connecting member 33 and covers the backing member 34. By having both the connecting member and the backing member located in the first recess, and the surface of the connecting member facing the breathable membrane, the surface of the backing member facing the breathable membrane, and the surface of the metal sheet facing the breathable membrane being flush with each other, the height difference between the three is reduced. During thermal compounding of the breathable membrane and the connecting member, issues caused by stretching of the breathable membrane, including local thinning due to internal stress, reduction in mechanical strength, and changes in water permeability and gas permeability, are reduced. As a result, the structural stability and service life of the vent valve are enhanced, thereby enhancing the reliability of the battery and the electric device.

The second case is that the depth D1 of the first recess 311 is greater than the thickness H of the backing member 34. Referring to FIG. 7 to FIG. 9, both the connecting member 33 and the backing member 34 are located in the first recess 311. At least part of the breathable membrane 32 is located in the space of the first recess 311. As shown in FIG. 7, in some embodiments, the surface of the breathable membrane 32 away from the backing member 34 protrudes from the surface of the metal sheet 31 away from the first through hole 310.

In one embodiment, the breathable membrane 32 is entirely located in the first recess 311, and the depth D1 of the first recess 311 is greater than or equal to the sum (H+A) of the thicknesses of the backing member 34 and the breathable membrane 32. As shown in FIG. 8, in some embodiments, the surface of the breathable membrane 32 away from the backing member 34 is flush with the surface of the metal sheet 31 away from the first through hole 310; as shown in FIG. 9, in some embodiments, the surface of the breathable membrane 32 away from the backing member 34 is located in the space of the first recess 311.

In FIG. 7 to FIG. 9, the fifth surface 33a of the connecting member 33 is fixedly connected to the first recess surface 311a of the first recess 311. The backing member 34 is accommodated in the second through hole 330. The third surface 32a of the breathable membrane 32 is fixedly connected to the sixth surface 33b of the connecting member 33 and covers the backing member 34.

As shown in FIG. 7, the fourth surface 32b of the breathable membrane 32 protrudes from the first surface 31a of the metal sheet 31.

As shown in FIG. 8, the fourth surface 32b of the breathable membrane 32 is flush with the first surface 31a of the metal sheet 31.

As shown in FIG. 9, the fourth surface 32b of the breathable membrane 32 is located in the space of the first recess 311.

By providing the first recess and having both the connecting member and the backing member located in the first recess, and at least part of the breathable membrane located in the space of the first recess, the thickness of the vent valve can be reduced, lowering the space occupancy of the vent valve in the battery. When the breathable membrane is entirely located in the space of the first recess, the thickness of the vent valve can be further reduced, lowering the space occupancy of the vent valve in the battery.

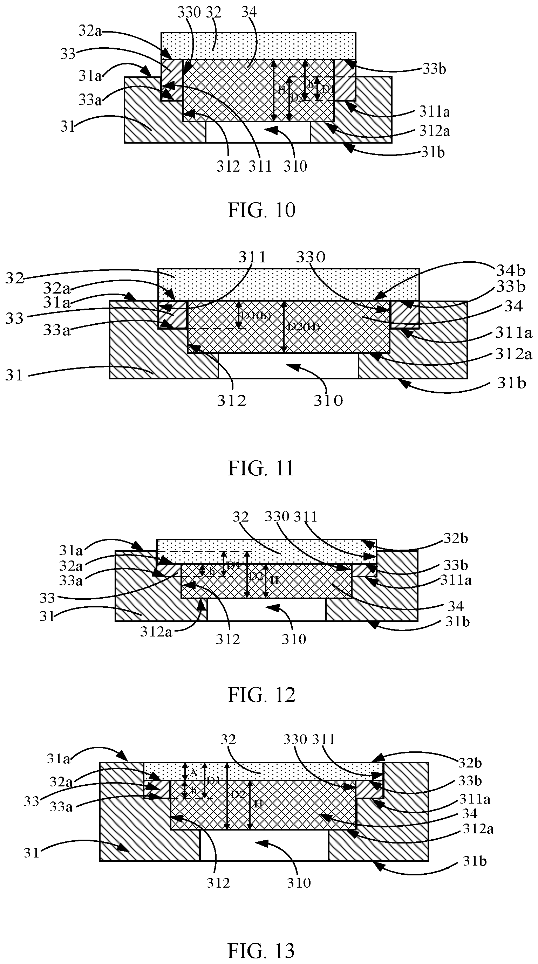

In some embodiments, referring to FIG. 10 to FIG. 14, the metal sheet 31 further includes a second recess 312, the depth D2 of the second recess 312 is greater than the depth D1 of the first recess 311, the second recess 312 is located on the bottom wall of the first recess 311, and the first recess 311 surrounds the second recess 312. The backing member 34 is at least partially disposed on the second recess 312 and covers the first through hole 310. The first recess 311 has a first recess surface 311a. The second recess 312 has a second recess surface 312a. The second recess surface 312a faces the first surface 31a of the metal sheet 31. The first through hole 310 extends through the second recess surface 312a and the second surface 31b of the metal sheet 31.

By providing the first recess and the second recess, the thickness of the vent valve can be further reduced, lowering the space occupancy of the vent valve in the battery.

In one embodiment, the connecting member 33 is at least partially located in the first recess 311, the backing member 34 is located in the second through hole 330, and the surface of the backing member 34 facing the breathable membrane 32 is flush with the surface of the connecting member 33 facing the breathable membrane 32.

By disposing the backing member and the connecting member on the second recess and the first recess respectively, the height difference between the surfaces of the backing member and the connecting member of different heights facing the breathable membrane is reduced, improving the adaptability to backing members and connecting members of different thicknesses during assembly; and by providing the surface of the backing member facing the breathable membrane flush with the surface of the connecting member facing the breathable membrane, during thermal compounding of the breathable membrane and the connecting member, issues caused by stretching of the breathable membrane, including local thinning due to internal stress, reduction in mechanical strength, and changes in water permeability and gas permeability, are reduced. As a result, the structural stability and service life of the vent valve are enhanced, thereby enhancing the reliability of the battery and the electric device.

In one embodiment, continuing to refer to FIG. 10, the connecting member 33 protrudes from the first recess 311, the depth D1 of the first recess 311 is less than the thickness h of the connecting member 33, the depth D2 of the second recess 312 is less than the thickness H of the backing member 34, and the surface of the backing member 34 facing the breathable membrane 32 and the surface of the connecting member 33 facing the breathable membrane 32 are located between the surface of the metal sheet 31 facing the breathable membrane 32 and the breathable membrane 32. In this case, the fifth surface 33a of the connecting member 33 is fixedly connected to the first recess surface 311a of the first recess 311, and the sixth surface 33b of the connecting member 33 protrudes from the first surface 31a of the metal sheet 31. The backing member 34 is accommodated in the second recess 312 and the second through hole 330. The third surface 32a of the breathable membrane 32 is fixedly connected to the sixth surface 33b of the connecting member 33 and covers the backing member 34.

For backing members and connecting members with large thicknesses and relatively large thickness differences, by providing the first recess and the second recess, the height difference between their surfaces facing the breathable membrane can be reduced, enhancing the adaptability to backing members and connecting members of different thicknesses during assembly. In addition, during thermal compounding of the breathable membrane and the connecting member, issues caused by stretching of the breathable membrane, including local thinning due to internal stress, reduction in mechanical strength, and changes in water permeability and gas permeability, are reduced, thereby enhancing the structural stability and service life of the vent valve and, in turn, enhancing the reliability of the battery and the electric device. In addition, for backing members and connecting members with large thicknesses, the first recess and the second recess provided in the metal sheet are capable of accommodating the connecting member and the backing member, thereby reducing the thickness of the vent valve and lowering the space occupancy of the vent valve in the battery.

In some embodiments, continuing to refer to FIG. 11 to FIG. 14, the connecting member 33 is entirely located in the first recess 311, and the depth D1 of the first recess 311 is greater than or equal to the thickness h of the connecting member 33.

The first case is that the depth D1 of the first recess 311 is equal to the thickness h of the connecting member 33, and in this case, the depth D2 of the second recess 312 is equal to the thickness H of the backing member 34. Refer to FIG. 11, the surface of the metal sheet 31 facing the breathable membrane 32, the surface of the connecting member 33 facing the breathable membrane 32, and the surface of the backing member 34 facing the breathable membrane 32 are flush with each other. In this case, the fifth surface 33a of the connecting member 33 is fixedly connected to the first recess surface 311a of the first recess 311, and the first surface 31a of the metal sheet 31, the sixth surface 33b of the connecting member 33, and the eighth surface 34b of the backing member 34 are flush with each other. The backing member 34 is accommodated in the second recess 312 and the second through hole 330. The third surface 32a of the breathable membrane 32 is fixedly connected to the sixth surface 33b of the connecting member 33 and covers the backing member 34.

By having the surface of the metal sheet facing the breathable membrane, the surface of the connecting member facing the breathable membrane, and the surface of the backing member facing the breathable membrane flush with each other, the height difference between the three is reduced. During thermal compounding of the breathable membrane and the connecting member, issues caused by stretching of the breathable membrane, including local thinning due to internal stress, reduction in mechanical strength, and changes in water permeability and gas permeability, are reduced. As a result, the structural stability and service life of the vent valve are enhanced, thereby enhancing the reliability of the battery and the electric device.

The second case is that the depth D1 of the first recess 311 is greater than the thickness h of the connecting member 33, and in this case, the depth D2 of the second recess 312 is greater than the thickness H of the backing member 34. Referring to FIG. 12, in this case, a part of the breathable membrane 32 is located in the space of the first recess 311, and the surface of the breathable membrane 32 away from the backing member 34 protrudes from the surface of the metal sheet 31 away from the first through hole 310.

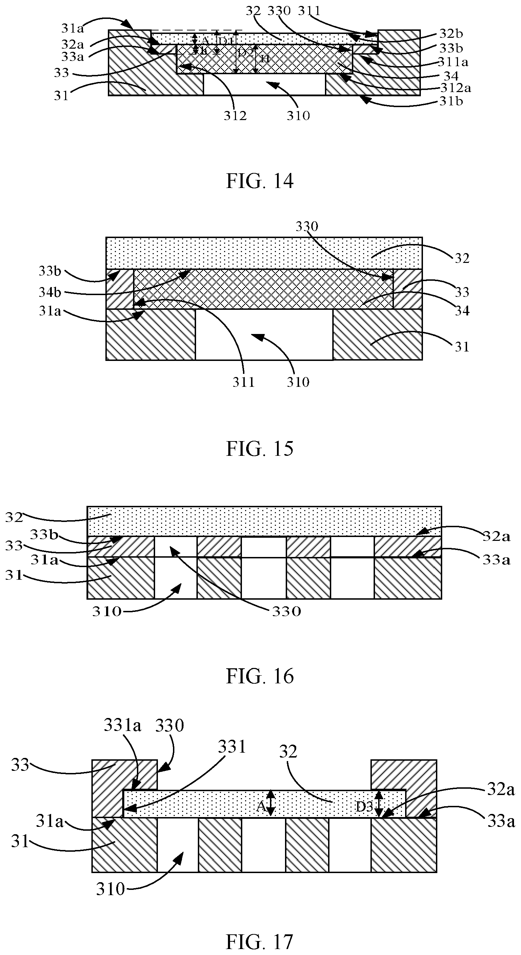

In one embodiment, referring to FIG. 13 and FIG. 14, the breathable membrane 32 is entirely located in the first recess 311, and the depth D1 of the first recess 311 is greater than or equal to the sum (h+A) of the thickness of the connecting member 33 and the thickness of the breathable membrane 32. In some embodiments, as shown in FIG. 13, the surface of the breathable membrane 32 away from the backing member 34 is flush with the surface of the metal sheet 31 away from the first through hole 310; and in some embodiments, as shown in FIG. 14, the surface of the breathable membrane 32 away from the backing member 34 is located in the space of the first recess 311.

In the above embodiments, the fifth surface 33a of the connecting member 33 is fixedly connected to the first recess surface 311a of the first recess 311, and the sixth surface 33b of the connecting member 33 is located in the space of the first recess 311. The backing member 34 is accommodated in the second recess 312 and the second through hole 330. The third surface 32a of the breathable membrane 32 is fixedly connected to the sixth surface 33b of the connecting member 33 and covers the backing member 34.

As shown in FIG. 12, the fourth surface 32b of the breathable membrane 32 protrudes from the first surface 31a of the metal sheet 31.

As shown in FIG. 13, the fourth surface 32b of the breathable membrane 32 is flush with the first surface 31a of the metal sheet 31.

As shown in FIG. 14, the fourth surface 32b of the breathable membrane 32 is located in the space of the first recess 311.

By disposing the connecting member and the backing member in the first recess and the second recess, and disposing at least a part of the breathable membrane in the space of the first recess, the thickness of the vent valve is reduced, lowering the space occupancy of the vent valve in the battery; and when the breathable membrane is entirely located in the space of the first recess, the thickness of the vent valve can be further reduced, lowering the space occupancy of the vent valve in the battery.

According to some embodiments of the present application, the metal sheet may not have a recess. Referring to FIG. 15, the vent valve 30 includes a backing member 34. The backing member 34 is made of a breathable material. Both the backing member 34 and the connecting member 33 are disposed on the first surface 31a of the metal sheet 31. The connecting member 33 surrounds the backing member 34. The backing member 34 is located in the second through hole 330 and covers the first through hole 310.

In one embodiment, the surface of the backing member 34 facing the breathable membrane 32 is flush with the surface of the connecting member 33 facing the breathable membrane 32, that is, the eighth surface 34b of the backing member 34 is flush with the sixth surface 33b of the connecting member 33.

By providing the backing member, the support force applied to the breathable membrane is increased, so that during operation in which the breathable membrane expands due to gas generation in the battery and contracts due to gas release, deformation is less likely to occur. By having the surface of the backing member facing the breathable membrane flush with the surface of the connecting member facing the breathable membrane, during thermal compounding of the breathable membrane and the connecting member, issues caused by stretching of the breathable membrane, including local thinning due to internal stress, reduction in mechanical strength, and changes in water permeability and gas permeability, are reduced. As a result, the structural stability and service life of the vent valve are enhanced, thereby enhancing the reliability of the battery and the electric device. In addition, by directly disposing the backing member and the connecting member on the surface of the metal sheet, secondary processing of the metal sheet is reduced, thereby saving operational steps.

According to some embodiments of the present application, the metal sheet may not have a recess, and the vent valve may not include a backing member. Referring to FIG. 16, the first through hole 310 of the metal sheet 31 extends through the metal sheet 31 along the thickness direction of the metal sheet 31. The second through hole 330 of the connecting member 33 extends through the connecting member 33 along the thickness direction of the connecting member 33. The fifth surface 33a of the connecting member 33 is fixedly connected to the first surface 31a of the metal sheet 31. The first through hole 310 corresponds to the second through hole 330. The breathable membrane 32 is disposed on the connecting member 33 and covers the second through hole 330. The third surface 32a of the breathable membrane is fixedly connected to the sixth surface 33b of the connecting member.

Since there is no backing member, in order to provide sufficient support force for the breathable membrane, the metal sheet is generally provided with two or more through holes, and the connecting member is correspondingly provided with two or more through holes corresponding to the metal sheet. Through this arrangement, the metal sheet and the connecting member can provide greater support force for the breathable membrane, so that during operation in which the breathable membrane expands due to gas generation in the battery and contracts due to gas release, deformation is less likely to occur, enhancing the structural stability and service life of the vent valve and in turn, enhancing the reliability of the battery and the electric device.

In one embodiment, the connecting member has a third recess. Referring to FIG. 17, the first through hole 310 of the metal sheet 31 extends through the metal sheet 31 along the thickness direction of the metal sheet 31. The second through hole 330 of the connecting member 33 extends through the connecting member 33 along the thickness direction of the connecting member 33, and the connecting member further has a third recess 331. The fifth surface 33a of the connecting member is fixedly connected to the first surface 31a of the metal sheet 31. The first through hole 310 corresponds to the second through hole 330. The breathable membrane 32 is disposed on the connecting member 33 and located between the connecting member and the metal sheet. The third recess surface 331a of the connecting member is fixedly connected to the third surface 32a of the breathable membrane, and the depth D3 of the third recess 331 is equal to the thickness A of the breathable membrane 32. Similarly, since there is no backing member, in order to provide sufficient support force for the breathable membrane, the metal sheet is generally provided with two or more through holes.

By providing the connecting member, deformation generated during the direct compounding of the breathable membrane and the metal sheet can be reduced, alleviating the problem of deteriorated gas permeability due to deformation, enhancing the structural stability and service life of the vent valve and in turn, enhancing the reliability of the battery and the electric device.

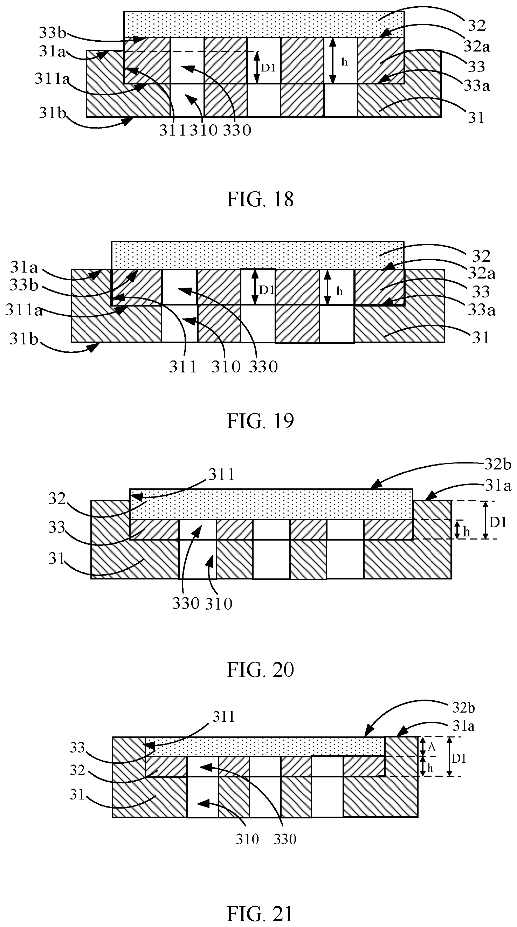

According to some embodiments of the present application, the metal sheet includes a first recess, but the vent valve does not include a backing member. Referring to FIG. 18 to FIG. 22, the metal sheet 31 includes a first recess 311, the first through hole 310 is located in the first recess 311, the connecting member 33 is at least partially located in the first recess 311, and the breathable membrane 32 is located on the surface of the connecting member 33 away from the first through hole 310. The first recess 311 has a first recess surface 311a. The first recess surface 311a faces the first surface 31a of the metal sheet 31. The first through hole 310 extends through the first recess surface 311a and the second surface 31b. The fifth surface 33a of the connecting member 33 is fixedly connected to the first recess surface 311a of the first recess 311 of the metal sheet 31. The breathable membrane 32 is located on the surface of the connecting member 33 away from the first through hole 310, that is, the third surface 32a of the breathable membrane 32 is fixedly connected to the sixth surface 33b of the connecting member 33.

By providing the first recess, at least a part of the connecting member may be accommodated, thereby reducing the thickness of the vent valve and lowering the space occupancy of the vent valve in the battery cell. The first recess may also provide support force for the connecting member, and the connection between the connecting member and the side surface of the recess can enhance the interfacial bonding between the connecting member and the metal sheet, thereby enhancing the structural stability of the vent valve.

In some embodiments, referring to FIG. 18, the connecting member 33 protrudes from the first recess 311, and the depth D1 of the first recess 311 is less than the thickness h of the connecting member 33. The breathable membrane 32 is located on the surface of the connecting member 33 away from the first through hole 310, that is, the breathable membrane 32 is located on the sixth surface 33b of the connecting member 33. In this case, the first recess is capable of accommodating a part of the connecting member, thereby reducing the thickness of the vent valve and lowering the space occupancy of the vent valve in the battery. In addition, the first recess can provide support force for the connecting member, and the connection between the connecting member and the side surface of the first recess can enhance the interfacial bonding between the connecting member and the metal sheet, thereby enhancing the structural stability of the vent valve.

In some embodiments, referring to FIG. 19 to FIG. 22, the connecting member 33 is entirely located in the first recess 311, and the depth D1 of the first recess 311 is greater than or equal to the thickness h of the connecting member 33. The breathable membrane 32 is located on the surface of the connecting member 33 away from the first through hole 310, that is, the breathable membrane 32 is located on the sixth surface 33b of the connecting member 33. By disposing the entire connecting member in the first recess, the first recess is capable of accommodating the entire connecting member, further reducing the thickness of the vent valve and lowering the space occupancy of the vent valve in the battery. In addition, the first recess may also provide support force for the connecting member, and the connection between the connecting member and the side surface of the first recess can enhance the interfacial bonding between the connecting member and the metal sheet, thereby enhancing the structural stability of the vent valve.

In one embodiment, referring to FIG. 19, the first case is that the depth D1 of the first recess 311 is equal to the thickness h of the connecting member 33. In this case, the first recess is capable of accommodating the entire connecting member, further reducing the thickness of the vent valve.

In one embodiment, referring to FIG. 20, the second case is that the depth D1 of the first recess 311 is greater than the thickness h of the connecting member 33. As shown in FIG. 20, the surface of the breathable membrane 32 away from the first through hole 310 protrudes from the surface of the metal sheet 31 away from the first through hole 310, that is, the fourth surface 32b of the breathable membrane 32 protrudes from the first surface 31a of the metal sheet 31. In this case, the first recess is capable of accommodating the entire connecting member and a part of the breathable membrane, further reducing the thickness of the vent valve.

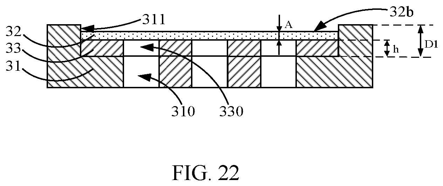

In some embodiments, the first recess is capable of accommodating the entire connecting member and the entire breathable membrane. Referring to FIG. 21 and FIG. 22, the breathable membrane 32 is entirely located in the first recess 311, and the depth D1 of the first recess 311 is greater than or equal to the sum (h+A) of the thicknesses of the connecting member 33 and the breathable membrane 32. As shown in FIG. 21, the surface of the breathable membrane 32 away from the first through hole 310 is flush with the surface of the metal sheet 31 away from the first through hole 310, that is, the fourth surface 32b of the breathable membrane 32 is flush with the first surface 31a of the metal sheet 31. As shown in FIG. 22, the surface of the breathable membrane 32 away from the first through hole 310 is located in the space of the first recess 311, that is, the fourth surface 32b of the breathable membrane 32 is located in the space of the first recess 311.

By setting the depth of the first recess to be greater than or equal to the sum of the thicknesses of the connecting member and the breathable membrane, the first recess is capable of accommodating the connecting member and the breathable membrane, thereby further reducing the thickness of the vent valve and lowering the space occupancy of the vent valve in the battery.

According to some embodiments of the present application, the thickness of the connecting member is within 50 to 1000 µm. Within this thickness range, the bonding strength between the connecting member and the metal sheet, and between the connecting member and the breathable membrane can be improved, while also allowing the vent valve to have a relatively small thickness, thereby lowering the space occupancy of the vent valve in the battery cell.

According to some embodiments of the present application, the material of the connecting member includes polypropylene-based polymer materials and/or modified polypropylene-based polymer materials. The modified polypropylene-based polymer materials are polypropylene-based polymer materials with polar functional groups on the surface. The polar functional groups include -OH, -COOH, and/or -NH₂. Optionally, the breathable membrane and the connecting member are made of the same material or different materials.

The material of the connecting member may be modified polypropylene-based polymer materials, for example, maleic anhydride-modified polypropylene-based polymer materials may be used. The modified polypropylene-based polymer materials are polypropylene-based polymer materials with polar functional groups on the surface. The polar functional groups include -OH, - COOH, and/or -NH₂, and the like. The surface of the metal sheet is nano-modified, preferably, the metal sheet is an aluminum sheet. This enables the formation of chemical bonding between the two, effectively improving the interfacial bonding strength. In addition, polypropylene-based polymer materials exhibit characteristics of low density, good processing performance, and good chemical resistance, which helps reduce the weight of the vent valve, facilitate molding, and allow adaptation to the internal environment of the battery. In addition, polypropylene materials have good fatigue resistance and are not prone to deformation and fracture.

In some embodiments, the base material of the connecting member is the same as that of the breathable membrane. Since the connecting member and the breathable membrane have the same base material, their melting points or compatibility are similar, such that they may be bonded by thermal fusion. Therefore, under the premise of satisfying gas permeability, the combination of the connecting member and the breathable membrane is easier. When selecting the material of the breathable membrane, the interfacial bonding with metal does not need to be considered, thereby broadening the selection range of breathable membrane materials and meeting the exhaust needs of different batteries.

In some embodiments, the base material of the connecting member may alternatively be different from that of the breathable membrane.

In some embodiments of the present application, a manufacturing method for a vent valve is also provided, specifically including:
providing a metal sheet, the metal sheet including at least one first through hole;
providing a connecting member, with the connecting member disposed on the metal sheet, where the connecting member includes at least one second through hole, and the first through hole is in communication with the second through hole; and
providing a breathable membrane, with the breathable membrane disposed on the connecting member and covering the second through hole, where a heat treatment temperature of the connecting member and the metal sheet is greater than or equal to the glass transition temperature of the breathable membrane, and a heat treatment temperature of the breathable membrane and the connecting member is less than the glass transition temperature of the breathable membrane.

The through holes in the metal sheet may be formed by punching. Punching is a metal forming method in which the desired shape of the workpiece is arranged on a metal sheet, then a punch is driven through the metal sheet by means of a steel die to cut out the desired shape and remove the excess parts.

In some embodiments of the present application, the metal sheet further includes a recess, and the recess may be formed by stamping. Stamping refers to a forming process in which a metal sheet is placed into stamping equipment and deformed by heating or pressurizing so as to obtain a desired shape.

In some embodiments of the present application, the surface of the metal sheet may undergo nano-modification treatment, thereby increasing the interfacial bonding force between the metal sheet and the connecting member.

In some embodiments of the present application, the metal sheet and the connecting member are bonded by thermal compounding, the breathable membrane and the connecting member are connected by thermal fusion, the heat treatment temperature of the connecting member and the metal sheet is greater than or equal to the glass transition temperature of the breathable membrane, and the heat treatment temperature of the breathable membrane and the connecting member is less than the glass transition temperature of the breathable membrane. By providing the connecting member, and with the heat treatment temperature of the connecting member and the metal sheet being greater than or equal to the glass transition temperature of the breathable membrane, and the heat treatment temperature of the breathable membrane and the connecting member being less than the glass transition temperature of the breathable membrane, deformation generated during the direct compounding of the breathable membrane and the metal sheet can be reduced, further alleviating the problem of deteriorated gas permeability due to deformation, enhancing the structural stability and service life of the vent valve and in turn, enhancing the reliability of the battery and the electric device.

In some embodiments of the present application, the vent valve further includes a backing member, which is only assembled in the vent valve and does not need to be fixedly connected to other structures of the vent valve, such as forming chemical bonds.

According to some embodiments of the present application, the present application further provides a battery cell. The battery cell includes a housing assembly. The vent valve as described in any of the above solutions or a vent valve manufactured by the manufacturing method for the vent valve is disposed on the housing assembly. Through the above arrangement, the structural stability and service life of the vent valve are enhanced, thereby enhancing the reliability of the battery.

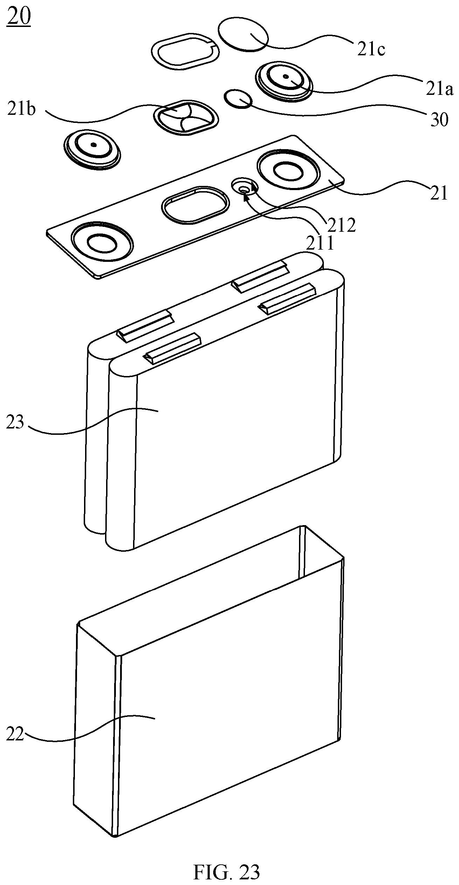

In some embodiments, referring to FIG. 23, FIG. 23 is an exploded schematic structural diagram of a battery cell 20 according to one or more embodiments. The battery cell 20 is the basic unit in the battery that achieves mutual conversion between chemical energy and electrical energy. The battery cell 20 includes a top cover 21, a housing 22, a cell structure 23, and other functional components. The housing assembly includes the top cover 21 and the housing 22. The top cover 21 or the housing 22 has a vent hole 211 and a mounting recess 212 disposed around the vent hole 211. The mounting recess 212 is located on a side of the top cover 21 or the housing 22 facing toward or away from the cell structure 23 of the battery cell 20. The vent valve 30 is disposed in the mounting recess 212.

The top cover 21 refers to a component that covers the opening of the housing 22 to isolate the internal environment of the battery cell 20 from the external environment. Without limitation, the shape of the top cover 21 may be adapted to the shape of the housing 22 to cooperate with the housing 22. Optionally, the top cover 21 may be made of a material with a certain hardness and strength (such as aluminum alloy), so that the top cover 21 is not prone to deformation when squeezed or collided, enabling the battery cell 20 to have higher structural strength and improved reliability. The top cover 21 may be provided with functional components such as electrode terminals 21a and explosion-proof valves 21b. The electrode terminal 21a may be electrically connected to the cell structure 23 for outputting or inputting electrical energy of the battery cell 20. The explosion-proof valve 21b may be disposed on the top cover 21 or on the housing 22. By way of example, in FIG. 23, the explosion-proof valve 21b is disposed on the top cover 21. The explosion-proof valve 21b is configured to actuate and release the internal pressure of the battery cell 20 upon thermal runaway of the battery cell 20, that is, when thermal runaway occurs inside the battery cell 20, the explosion-proof valve 21b may actuate and open to release gases and the like generated inside the battery cell 20 due to thermal runaway. The top cover 21 is further provided with a pressure relief mechanism vent valve 30 for releasing internal pressure when the internal pressure or temperature of the battery cell 20 reaches a threshold. The top cover 21 or the housing 22 has a vent hole 211 and a mounting recess 212 disposed around the vent hole 211. By way of example, in FIG. 23, the vent hole 211 and the mounting recess 212 disposed around the vent hole 211 are disposed on the top cover 21. The mounting recess 212 is located on a side of the top cover 21 or the housing 22 facing toward or away from the cell structure 23 of the battery cell 20, that is, the welding surface of the vent valve 30 and the top cover 21 or the housing 22 is located on a side facing toward or away from the cell structure 23 of the battery cell 20. The vent valve 30 is disposed in the mounting recess 212. The material of the top cover 21 may be varied and includes, but is not limited to, copper, iron, aluminum, stainless steel, aluminum alloy, and plastic. In some embodiments, an insulating member may also be provided on the inner side of the top cover 21. The insulating member may be configured to isolate electrical connection components in the housing 22 from the top cover 21 to reduce the risk of short circuits. By way of example, the insulating member may be made of plastic, rubber, or the like.

The battery cell 20 may also include a shielding member 21c. The shielding member 21c is mounted on the top cover 21 or the housing 22. The shielding member 21c is located on a side of the vent valve 30 away from the cell structure 23, and the shielding member 21c covers the vent valve 30. In this way, the shielding member 21c can provide certain protection and shielding for the vent valve 30, reducing wear or damage of the vent valve 30 caused by the external environment and lowering the risk of foreign matter, particles, or the like entering the vent valve 30, thereby helping to extend its service life. In addition, covering the vent valve 30 with the shielding member 21c improves the aesthetic appearance of the outer surface of the battery cell 20. Furthermore, this facilitates connecting other components such as detection elements on a side of the shielding member 21c away from the vent valve 30, reducing interference from the region of the top cover 21 or housing 22 where the vent valve 30 is disposed with respect to these components.

The top cover of the battery is located at one end of the battery and is laser welded to the battery housing, wrapping and fixing the bare cell and achieving a sealing effect. The bare cell refers to a single electrochemical cell containing positive and negative electrodes, which generally cannot be used directly.

Through the above arrangement, the battery top cover adds a new breathable component, namely the vent valve, which can slowly discharge the gases inside the cell to the outside of the cell during its life cycle, playing a role in exhausting and reducing pressure, and can effectively improve the long-term reliability of the cell. In addition, by providing the vent hole and the mounting recess around the vent hole on the top cover or the housing, the vent valve may be disposed at different positions of the battery cell according to specific application scenarios, enhancing the flexibility of the vent valve arrangement to meet different application needs.

The housing 22 is an assembly used to cooperate with the top cover 21 to form the internal environment of the battery cell 20, where the formed internal environment may be used to accommodate the cell structure 23, electrolyte solution, and other components. The housing 22 and the top cover 21 may be independent components. An opening may be provided on the housing 22, and the top cover 21 covers the opening at its location to form the internal environment of the battery cell 20. Without limitation, the top cover 21 and the housing 22 may alternatively be integrated. Specifically, the top cover 21 and the housing 22 may first form a common connection surface before other components are housed, and when it is necessary to encapsulate the interior of the housing 22, the top cover 21 covers the housing 22. The housing 22 may have various shapes and sizes, such as cuboid, cylindrical, or hexagonal prism. Specifically, the shape of the housing 22 may be determined according to the specific shape and size of the cell structure 23. The housing 22 may be made of various materials, including but not limited to copper, iron, aluminum, stainless steel, aluminum alloy, and plastic.

The cell structure 23 is a component in the battery cell 20 where electrochemical reactions occur. The housing 22 may contain one or more cell structures 23. The cell structure 23 is mainly formed by winding or stacking cathode sheets and anode sheets, and a separator is usually provided between the cathode sheet and the anode sheet. The parts of the cathode sheet and the anode sheet having active materials constitute the main body of the cell structure, and the parts of the cathode sheet and the anode sheet without active materials each constitute tabs. The cathode tabs and anode tabs may be located together at one end of the main body or separately at two ends of the main body. During the charging and discharging process of the battery, the cathode active material and the anode active material react with the electrolyte solution, and the tabs connect to the electrode terminals to form a current loop.

The cathode electrode sheet generally includes a cathode current collector and a cathode coating layer disposed on the cathode current collector.

The cathode current collector generally uses conventional metal foil or composite current collector (a composite current collector may be formed by disposing metal material on a polymer substrate). In an example, the cathode current collector may be aluminum foil.

The cathode coating layer includes a cathode active material, a binder, a conductive agent, and other optional additives.

In an example, the cathode active material may include one or more of lithium transition metal oxides, lithium-containing phosphates with olivine structure and their respective modified compounds, transition metal oxides, polyanion compounds, and Prussian blue analogs. Examples of lithium transition metal oxides may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of lithium-containing phosphates with olivine structure may include one or more of lithium iron phosphate, lithium iron phosphate carbon composite, lithium manganese phosphate, lithium manganese phosphate carbon composite, lithium manganese iron phosphate, lithium manganese iron phosphate carbon composite, and their modified compounds. The modified compounds of the above materials may be obtained by doping modification and/or surface coating modification of the materials. These materials may all be commercially available.

In an example, the conductive agent may be one or more of superconducting carbon, acetylene black, carbon black, Ketjenblack, carbon dots, carbon nanotubes, Super P (SP), graphite, and carbon nanofibers.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

In an example, other optional additives may be thickeners, dispersants (such as sodium carboxymethyl cellulose CMC-Na), and PTC thermistor materials.

The anode electrode sheet generally includes an anode current collector and an anode coating layer disposed on the anode current collector.

The anode current collector may use conventional metal foil or composite current collector (for example, a composite current collector may be formed by disposing metal material on a polymer substrate). In an example, the anode current collector may be copper foil.

The anode coating layer includes an anode active material, a binder, a conductive agent, and other optional additives.

The anode active material may include one or more of silicon-based materials, silicon-carbon materials, carbon materials, and selenium-based materials. Specifically, it includes one or more of artificial graphite, natural graphite, hard carbon, soft carbon, silicon-based materials, and selenium-based materials. The silicon-based materials may be selected from one or more of elemental silicon, silicon oxide compounds (such as silicon monoxide), silicon-carbon composites, silicon-nitrogen composites, and silicon alloys. The selenium-based materials may be selected from one or more of elemental selenium, selenium oxide compounds, and selenium alloys. These materials can all be commercially available. In some embodiments of the present application, the design concept of active density is also applicable to sodium batteries, or in other words, the type of battery is not limited. The present application does not limit the selection and matching of electrode materials. Different combinations of anode and cathode materials may have different active density regulation standards.

In an example, the conductive agent may be one or more of superconducting carbon, acetylene black, carbon black, Ketjenblack, carbon dots, carbon nanotubes, graphite, and carbon nanofibers.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB).

In an example, other optional additives may be thickeners, dispersants (such as sodium carboxymethyl cellulose CMC-Na), and PTC thermistor materials.

In one embodiment, the cathode active material and the anode active material are mixed with the binder and the conductive agent in proportion to obtain cathode slurry and anode slurry, then the cathode slurry and the anode slurry are respectively coated on the corresponding current collectors, dried after coating, to obtain the cathode electrode sheet and the anode electrode sheet.

Further, the battery cell further includes a separator and an electrolyte solution.

The separator is disposed between the cathode electrode sheet and the anode electrode sheet and as an insulating layer, it can effectively prevent the cathode electrode sheet and the anode electrode sheet from contacting each other and causing internal short circuits, while allowing electrolyte ions to pass smoothly. The performance of the separator determines the interface structure, internal resistance, and the like of the battery, directly affecting the mechanical strength and reliability of the battery.

The material for the separator is not limited to a specific type and may use any material known in the art that can be used for battery separators. Those skilled in the art can select according to needs. In an example, the material of the separator may include one or more of polyolefins, fluorinated polymers, cellulose, and glass fibers. The polyolefins may include, but are not limited to, one or more of polypropylene and polyethylene. These materials can all be commercially available.

In some embodiments, the separator includes a base membrane and a coating layer located on one side or two sides of the base membrane, and the coating layer includes fillers. The fillers may include inorganic materials, polymer binders, dispersants. The inorganic materials include one or more of boehmite and silicon dioxide. The polymer binder materials include one or more of PVDF (polyvinylidene fluoride) and polystyrene-acrylate; the dispersant materials include polyvinyl alcohol, and the like. By providing a coating layer on one side or two sides of the separator, the performance of the separator can be improved and regulated. The performance of the separator may be regulated by regulating the type of fillers. For example, a filler with heat insulation and heat resistance may be added to improve the heat resistance of the separator. The material for the base membrane is not limited to a specific type and may include one or more of polyethylene, polypropylene, and glass fibers. These materials can all be commercially available.

The electrolyte solution plays the role of conducting ions between the cathode electrode sheet and the anode electrode sheet and may include an electrolyte salt and a solvent.

In an example, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato) phosphate (LiDFOP), and lithium tetrafluoro(oxalato) phosphate (LiTFOP).

In an example, the solvent may be selected from one or more of ethylene carbonate (Ethylene Carbonate, EC), propylene carbonate (Propylene Carbonate, PC), methyl ethyl carbonate (Methyl Ethyl Carbonate, EMC), diethyl carbonate (Diethyl Carbonate, DEC), dimethyl carbonate (Dimethyl Carbonate, DMC), dipropyl carbonate (Dipropyl Carbonate, DPC), methyl propyl carbonate (Methyl Propyl Carbonate, MPC), ethyl propyl carbonate (Diisopropyl Carbonate, EPC), butylene carbonate (Butylene Carbonate, BC), fluoroethylene carbonate (Fluoroethylene Carbonate, FEC), methyl formate (Methyl Formate, MF), methyl acetate (Methyl Acetate, MA), ethyl acetate (Ethyl Acetate, EA), n-propyl acetate (n-Propyl Acetate, PA), methyl propionate (Methyl Propionate, MP), ethyl propanoate (Ethyl Propanoate, EP), n-propyl propionate (n-Propyl Propionate, PP), methyl butyrate (Methyl Butyrate, MB), ethyl butyrate (Ethyl Butyrate, EB), 1,4-butyrolactone (1,4-Butyrolactone, GBL), tetramethylene sulfone (Tetramethylene Sulfone, SF), methyl sulfone (Methyl Sulfone, MSM), methyl ethyl sulfone (Methyl Ethyl Sulfone, EMS), and diethyl sulfone (Diethyl Sulfone, ESE).

In some embodiments, the electrolyte solution further includes an additive. For example, the additive may include an anode film-forming additive, or a cathode film-forming additive, or an additive that can improve certain performances of the battery, such as an additive that improve overcharge performance of the battery, an additive that improve high-temperature performance of the battery, and an additive that improve low-temperature performance of the battery.

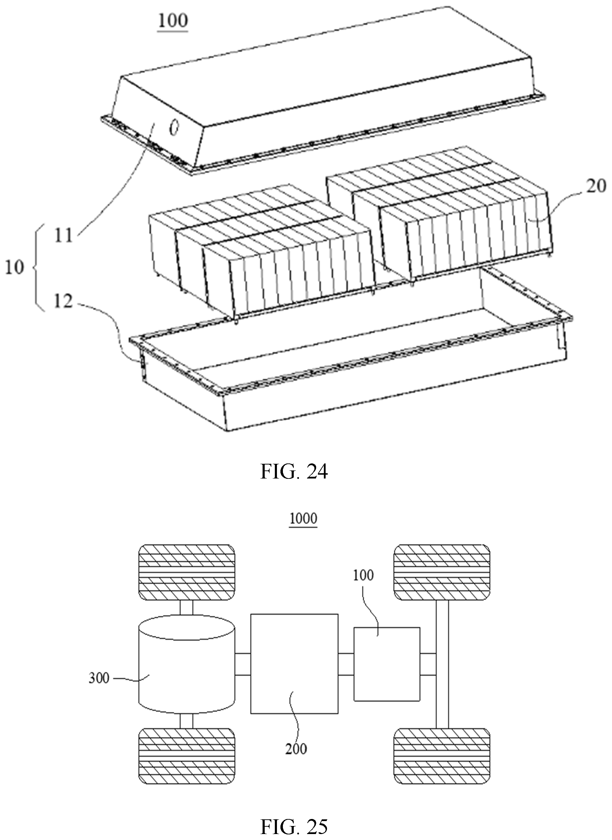

According to some embodiments of the present application, the present application further provides a battery 100. The battery 100 includes the vent valve 30 as described in any of the above solutions or a vent valve 30 manufactured by the manufacturing method for the vent valve, or the battery cell 20 as described in any solution. The battery 100 may be a battery pack or a battery module. Referring to FIG. 24, in the battery 100, there may be multiple battery cells 20, and the multiple battery cells 20 may be connected in series, in parallel, or in a hybrid manner, where hybrid manner means that there are both series and parallel connections among a plurality of battery cells 20. The plurality of battery cells 20 may be directly connected in series, in parallel, or in a hybrid manner, and then the overall formed by the plurality of battery cells 20 is accommodated in the enclosure 10. Alternatively, the battery 100 may have a plurality of battery cells 20 first connected in series, in parallel, or in a hybrid manner to form a battery module, and then a plurality of battery modules are connected in series, in parallel, or in a hybrid manner to form an overall and accommodated in the enclosure 10. The battery 100 may alternatively include other structures, for example, the battery 100 may further include a busbar component for achieving electrical connection between a plurality of battery cells 20.

In some embodiments, the battery 100 of the present application includes an enclosure 10 and a battery cell 20. The battery cell 20 is accommodated in the enclosure 10. Referring to FIG. 24, FIG. 24 is an exploded schematic structural diagram of a battery according to an embodiment. The enclosure 10 is configured to provide an accommodation space for the battery cell 20, and the enclosure 10 may have various structures. In some embodiments, the enclosure 10 may include a first portion 11 and a second portion 12. The first portion 11 and the second portion 12 are covered with each other, and the first portion 11 and the second portion 12 together define an accommodation space for accommodating the battery cell 20. The second portion 12 may be a hollow structure with one end open, the first portion 11 may be a plate-like structure, and the first portion 11 covers the open side of the second portion 12, so that the first portion 11 and the second portion 12 together define the accommodation space. The first portion 11 and the second portion 12 may alternatively both be hollow structures with one side open, and the open side of the first portion 11 covers the open side of the second portion 12. Alternatively, the enclosure 10 formed by the first portion 11 and the second portion 12 may have various shapes, such as cylindrical, or cuboid. Each battery cell 20 may be a battery, which may be a lithium-ion battery, a sodium-ion battery, a magnesium-ion battery, or an aluminum-ion battery, but is not limited thereto. The battery cell 20 may be cylindrical, flat, cuboid, or any other shape.

The battery has stacked and wound production methods, that is, the battery is divided into two types of a stacked battery and a wound battery. The stacked battery has a uniform current collection effect, a smaller internal resistance, and a large specific power. However, to ensure precision, a mold has an extremely high precision requirement. Therefore, the stacked battery has high equipment investment, a more complex process, and low production efficiency. The wound battery has simple production, general precision requirement for equipment in production and assembly processes, high production efficiency, and low costs. In terms of performance, the wound battery has excellent high and low temperature performance, very rapid charging, an ultra-long service life, a smooth high output voltage, a sturdy structure and strong shock resistance.

The battery disclosed in the embodiments of the present application can be used in electric devices that use batteries as power sources or various energy storage systems that use batteries as energy storage elements. The electric devices may be, but are not limited to, mobile phones, tablets, notebook computers, electric toys, electric tools, electric bicycles, electric vehicles, ships, and spacecraft. The electric toys may include fixed or mobile electric toys, such as game consoles, electric vehicle toys, electric ship toys, and electric aircraft toys. Spacecraft may include airplanes, rockets, space shuttles, spaceships, and the like.

The energy storage system may be an energy storage power system such as a hydropower, thermal power, wind power, or solar power station.

The following embodiments are described by taking a vehicle 1000 as an example of an electric device according to an embodiment of the present application for convenience of explanation.

Referring to FIG. 25, FIG. 25 is a schematic structural diagram of an electric device according to an embodiment of the present application. The electric device may be a vehicle 1000, a drone, an airplane, or the like. The vehicle 1000 may be a fuel vehicle, a gas vehicle, or a new energy vehicle. The new energy vehicle may be a pure electric vehicle, a hybrid vehicle, or a range-extended vehicle, or the like. The vehicle 1000 is provided with a battery 100 inside, and the battery 100 may be positioned at the bottom, front, or rear of the vehicle 1000. The battery 100 may be configured to supply power to the vehicle 1000, for example, the battery 100 may serve as the operating power source of the vehicle 1000. The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of the present application, the battery 100 may not only serve as the operating power source of the vehicle 1000, but also as the driving power source of the vehicle 1000, replacing or partially replacing fuel or natural gas to provide driving power for the vehicle 1000.

The above electric devices and energy storage systems are also within the protection scope of the present application.

In conclusion, it should be noted that the above embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments can be combined in any manner. The present application is not limited to the specific embodiments disclosed in this specification but includes all technical solutions falling within the scope of the claims.

## Claims

1. A vent valve comprising:
a metal sheet, the metal sheet comprising at least one first through hole;
a connecting member, the connecting member comprising at least one second through hole, wherein the connecting member is disposed on the metal sheet, and the first through hole is in communication with the second through hole; and
a breathable membrane, the breathable membrane being disposed on the connecting member and covering the second through hole.

2. The vent valve according to claim 1, wherein the vent valve further comprises a backing member, the backing member being made of a breathable material, the connecting member surrounds the backing member, and the backing member is at least partially located in the second through hole.

3. The vent valve according to claim 2, wherein the metal sheet comprises a first recess, the first through hole is located in the first recess, and the backing member is at least partially disposed in the first recess and covers the first through hole.

4. The vent valve according to claim 3, wherein the connecting member is at least partially located in the first recess, and a surface of the backing member facing the breathable membrane is flush with the surface of the connecting member facing the breathable membrane.

5. The vent valve according to claim 4, wherein the connecting member protrudes from the first recess, a depth of the first recess is less than the thickness of the backing member, the surface of the backing member facing the breathable membrane and the surface of the connecting member facing the breathable membrane are located between a surface of the metal sheet facing the breathable membrane and the breathable membrane.

6. The vent valve according to claim 4, wherein the connecting member is entirely located in the first recess, and the depth of the first recess is greater than or equal to the thickness of the backing member.

7. The vent valve according to claim 6, wherein the breathable membrane is entirely located in the first recess, and the depth of the first recess is greater than or equal to a sum of the thicknesses of the backing member and the breathable membrane.

8. The vent valve according to claim 3, wherein the metal sheet further comprises a second recess, a depth of the second recess being greater than the depth of the first recess, the second recess is located on the bottom wall of the first recess, the first recess surrounds the second recess, and the backing member is at least partially disposed on the second recess and covering the first through hole.

9. The vent valve according to claim 8, wherein the connecting member is at least partially located in the first recess, the backing member is located in the second through hole, and a surface of the backing member facing the breathable membrane is flush with the surface of the connecting member facing the breathable membrane.

10. The vent valve according to claim 9, wherein the connecting member protrudes from the first recess, the depth of the first recess is less than the thickness of the connecting member, the depth of the second recess is less than the thickness of the backing member, and the surface of the backing member facing the breathable membrane and the surface of the connecting member facing the breathable membrane are located between the surface of the metal sheet facing the breathable membrane and the breathable membrane.

11. The vent valve according to claim 9, wherein the connecting member is entirely located in the first recess, and the depth of the first recess is greater than or equal to the thickness of the connecting member.

12. The vent valve according to claim 11, wherein the breathable membrane is entirely located in the first recess, and the depth of the first recess is greater than or equal to a sum of the thickness of the connecting member and the thickness of the breathable membrane.

13. The vent valve according to claim 2, wherein both the backing member and the connecting member are disposed on the surface of the metal sheet, and the backing member covers the first through hole.

14. The vent valve according to claim 1, wherein the connecting member is located on the surface of the metal sheet, and the breathable membrane is located on a surface of the connecting member away from the metal sheet.

15. The vent valve according to claim 1, wherein the connecting member is located on the surface of the metal sheet, the connecting member has a third recess, the second through hole is located in the third recess, and the breathable membrane is disposed on the third recess and located between the connecting member and the metal sheet.

16. The vent valve according to claim 1, wherein the metal sheet comprises a first recess, the first through hole is located in the first recess, the connecting member is at least partially located in the first recess, and the breathable membrane is located on the surface of the connecting member away from the first through hole.

17. The vent valve according to claim 16, wherein the connecting member protrudes from the first recess, and a depth of the first recess is less than the thickness of the connecting member.

18. The vent valve according to claim 16, wherein the connecting member is entirely located in the first recess, and the depth of the first recess is greater than or equal to the thickness of the connecting member.

19. The vent valve according to claim 18, wherein the breathable membrane is entirely located in the first recess, and the depth of the first recess is greater than or equal to the sum of the thicknesses of the connecting member and the breathable membrane.

20. The vent valve according to any one of claims 1 to 19, wherein the thickness of the connecting member is 50 to 1000 µm.

21. The vent valve according to any one of claims 1 to 20, wherein the material of the connecting member comprises a polypropylene-based polymer material and/or a modified polypropylene-based polymer material, wherein the modified polypropylene-based polymer material is a polypropylene-based polymer material with polar functional groups on a surface thereof, the polar functional groups comprising -OH, -COOH, and/or -NH₂; optionally, the breathable membrane and the connecting member are made of the same material or different materials.

22. A manufacturing method for the vent valve according to any one of claims 1 to 21, comprising:
providing a metal sheet, the metal sheet comprising at least one first through hole;
providing a connecting member, with the connecting member disposed on the metal sheet, wherein the connecting member comprises at least one second through hole, and the first through hole is in communication with the second through hole; and
providing a breathable membrane, with the breathable membrane disposed on the connecting member and covering the second through hole, wherein a heat treatment temperature of the connecting member and the metal sheet is greater than or equal to a glass transition temperature of the breathable membrane, and a heat treatment temperature of the breathable membrane and the connecting member is less than the glass transition temperature of the breathable membrane.

23. A battery cell comprising:
a housing assembly; and
the vent valve according to any one of claims 1 to 21 or a vent valve manufactured by the manufacturing method for the vent valve according to claim 22, the vent valve being disposed on the housing assembly.

24. The battery cell according to claim 23, wherein the housing assembly comprises a top cover and a housing, the top cover or the housing having a vent hole and a mounting recess being disposed around the vent hole, wherein the mounting recess is located on a side of the top cover or the housing facing toward or away from the cell structure of the battery cell, and the vent valve is disposed in the mounting recess.

25. A battery comprising the vent valve according to any one of claims 1 to 21, a vent valve manufactured by the manufacturing method for the vent valve according to claim 22, or the battery cell according to claim 23 or 24.

26. An electric device comprising the battery according to claim 25.
